# EUROPEAN PATENT SPECIFICATION

(11) **EP 4 275 913 B1**
(45) Date of publication and mention of the grant of the patent: **27.05.2026**
(21) Application number: 23172331.3
(22) Date of filing: 09.05.2023
(51) Int. Cl.: B60B 3/00, B60B 3/10, B60B 3/04

(54) **VEHICLE WHEEL WITH STIFFENING PORTIONS IN THE CIRCUMFERENTIAL DIRECTION**
FAHRZEUGRAD MIT VERSTÄRKUNGENSBEREICHE IN UMLAUFRICHTUNG
ROUE DE VEHICULE AVEC PORTIONS DE REINFORCEMENT CIRCUMFERENTIELLES

(30) Priority: 10.05.2022 IT 202200009545
(43) Date of publication of application: 15.11.2023
(73) Proprietor: MW Italia S.r.l., 10098 Rivoli (TO) (IT)
(72) Inventor: PERRIS MAGNETTO, Gabriele, I-10098 RIVOLI (Torino) (IT); BARTOLI, Paolo, I-19025 PORTOVENERE (La Spezia) (IT); GOTTA, Giacomo, I-10081 CASTELLAMONTE (Torino) (IT); ZANOLLI, Emanuele, I-10144 TORINO (IT); RONCO, Davide, I-14019 VILLANOVA D'ASTI (Asti) (IT); GALLIO, Giorgio, I-10126 TORINO (IT)
(74) Representative: Vanzini, Christian

(56) References cited:
- EP-A1- 2 495 110
- US-A1- 2006 197 371
- US-A1- 2012 217 792
- US-B2- 7 018 000
- US-B2- 8 491 062
- US-B2- 9 327 547

## Description

The present invention relates to a wheel for vehicles, comprising
a rim of sheet metal, and
a disc of sheet metal, having:
   - a central part adapted to be connected to an axle hub, said central part comprising a substantially flat mounting portion and a connecting portion surrounding the mounting portion, wherein the connecting portion defines a surface of revolution about an axis of the wheel that has, in cross-section, a curvilinear contour extending axially from the mounting portion to the outside of the wheel,
   - a plurality of spokes extending from the connecting portion, each spoke comprising a pair of spoke ribs interconnected by a spoke web, and
   - a peripheral connecting ring which extends concentrically with the axis of the wheel and interconnects the outer ends of said spokes, said connecting ring being fixed to a radially inner surface of the rim, wherein corresponding openings of the disc are defined between the connecting ring and pairs of adjacent spokes, the radially outer edge of said openings being defined by the connecting ring, wherein said spoke ribs and spoke web are comprised between said central part of the disc and said connecting ring.

EP 2495110 A1 discloses a spoked wheel. US 7018000 B2 discloses a spoked wheel comprising deformed portions in the central part of the disc. US 9327547 B2 discloses a spoked wheel comprising deformed portions in the spoke web. US 2006/197371 A1 discloses a spoked wheel comprising deformed portions in the central part of the disc.

An object of the present invention is to provide a solution to improve wheel performance, in particular fatigue strength and stiffness performance.

This object is achieved according to the invention by a wheel of the type defined above, wherein
the disc comprises a plurality of separate deformed portions extending in the circumferential direction with a total angular span of less than 360°, said deformed portions being located on the spokes outside of the spoke web and being radially comprised between the connecting portion and the connecting ring, wherein said deformed portions have, in radial cross-section, a contour that is lowered or protruding with respect to a surrounding disc area.

The local deformed portions constitute additional formations that impart stiffening to the wheel to increase fatigue strength and the stiffness of the wheel.

In one embodiment, each of said deformed portions is placed in a relevant spoke of said plurality of spokes, between the relevant spoke web and the peripheral connecting ring. The circumferential stiffening of the spokes conferred by the aforementioned deformed portions allows for increased fatigue performance and dynamic and static stiffness of the wheel, resulting in improved handling.

According to another embodiment, said deformed portions are interposed radially between the central part of the disc and the plurality of spokes, each of said deformed portions extending and being comprised between the spoke webs of each relevant pair of adjacent spokes. These stiffening formations located on the so-called "nose" of the disc allow for increased fatigue performance and dynamic stiffness of the wheel, resulting in improved handling.

Further features and advantages of the wheel according to the invention will become clearer from the following detailed description of some embodiments of the invention, made with reference to the accompanying drawings, provided purely by way of non-limiting example, wherein:
- Fig. 1 is a perspective view of a wheel according to the invention;
- Fig. 2 is a radial cross-sectional view of a detail of Fig. 1;
- Fig. 3 is a perspective view of a further wheel according to the invention;
- Fig. 4 is a perspective view of another wheel according to the invention;
- Fig. 5 is a radial cross-sectional view of a detail of Fig. 4;
- Fig. 6 and 7 are radial cross-sectional views of details of further wheels according to the invention.

In the following description, "axial direction" means a direction parallel to the wheel axis. The indications "inner" and "outer," with respect to the axial direction, refer to the installation condition of the wheel on the vehicle, where "inner" means "toward the vehicle" and "outer" means "away from the vehicle." The radial direction is therefore also defined with respect to the wheel axis. The term "radial cross-section" therefore refers to a cross-section taken on a radial plane, i.e. passing through the wheel axis.

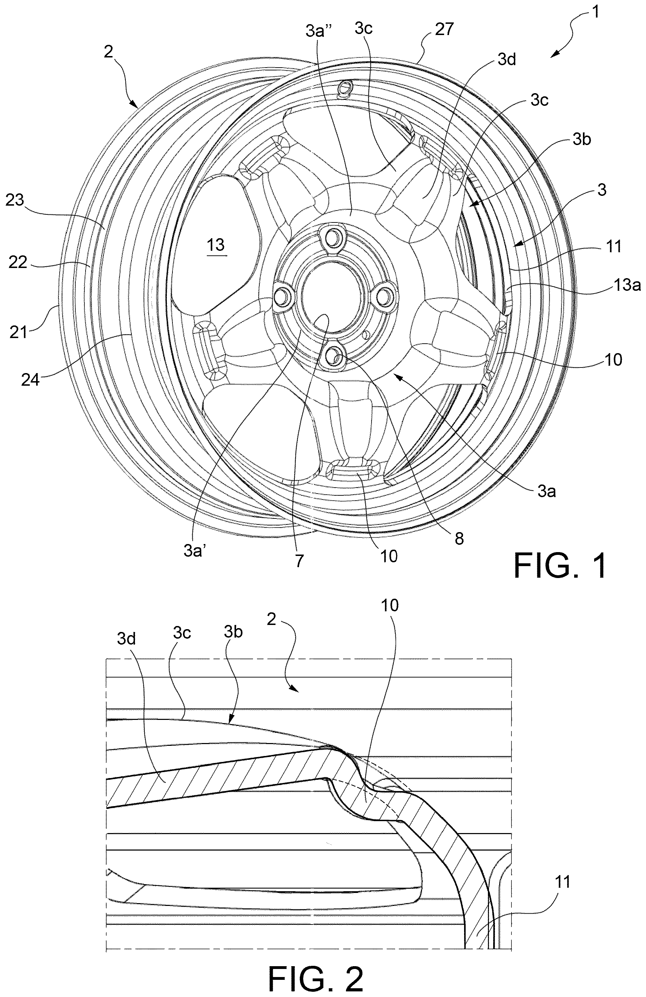

In Fig. 1 and 2, reference numeral 1 indicates as a whole a wheel for vehicles according to the invention. The wheel 1 comprises a rim 2 of sheet metal, e.g., steel or aluminum, and formed, for example, by rolling and welding, and a disc 3 of sheet metal, e.g., steel or aluminum, and formed by stamping and blanking.

The rim 2 conventionally comprises, in succession along the axial direction from the inside to the outside and connected to each other, an inner flange 21, an inner bead seat 22, an inner retaining hump 23, a rim well 24, an outer retaining hump, an outer bead seat, and an outer flange 27.

The disc 3 has a central part 3a for connecting to an axle hub (not shown). In the illustrated embodiment, the central part 3a of the disc 3 essentially comprises a substantially flat mounting portion 3a', and a connecting portion 3a" surrounding the mounting portion 3a'. The mounting portion 3a' has a central opening 7 and, around this, a plurality of holes 8 for the passage of tightening bolts. According to a plan view, this mounting portion 3a' essentially has the shape of a circular crown. The connecting portion 3a" defines a surface of revolution about the axis z of the wheel which has, in cross-section, a curvilinear contour which, starting from the mounting portion 3a', extends axially toward the outside of the wheel 1.

A plurality of angularly spaced spokes 3b extends outward from the connecting portion 3a" of the central part 3a of the disc 3.

The outer ends of the spokes 3b, at which the spokes 3b have an area curved towards the inside of the wheel, are interconnected by a peripheral connecting ring 11, which extends concentrically with the axis z of the wheel 1.

Corresponding openings 13 of the disc 3 are defined between the connecting ring 11 and pairs of adjacent spokes 3b, which in the embodiment illustrated by way of example have, according to a plan view, a polygonal shape with rounded vertices.

Each spoke 3b comprises a pair of spoke ribs 3c interconnected by a spoke web 3d. According to a plan view, the spoke ribs 3c are arranged obliquely relative to the centerline of the respective spokes 3b, and in particular the two spoke ribs 3c of each spoke 3b are arranged so as to approach each other in the centrifugal direction until they join at an intermediate radial position between the spoke web and the peripheral connecting ring.

Each spoke rib 3c is composed of a deformed stiffening part of the relevant spoke 3b, protruding in the axial direction, and possibly also in the radial direction, relative to the spoke web 3d adjacent thereto. In the circumferential direction, each spoke rib 3c borders on one side with one the openings 13, and on the other with the spoke web 3d adjacent thereto, and is therefore comprised between the aforesaid opening and spoke web.

Each spoke rib 3c, understood as a deformed and protruding part of a spoke 3b, comprised between an opening 13 and a spoke web 3d adjacent thereto, ends externally at most on or near the connecting ring 11. The spoke ribs 3c are therefore comprised between the connecting portion 3a" of the central part 3a of the disc 3 and the connecting ring.

In the peripheral area where the spoke rib 3c ends, the protrusion defined thereby disappears by tapering into a disc region consisting of a revolution surface portion substantially concentric with the axis z of the wheel.

In addition to the spoke ribs 3c, the disc 3 also comprises a plurality of additional deformed portions with a stiffening function, obtained in the process of stamping sheet metal to manufacture the disc. These deformed portions are made in such a way as to extend (at least) in the circumferential direction and may be located in any area of the spokes, including the transition between the connecting portion 3a" and the spokes that constitute the root from which the spokes branch outward. In any case, these deformed portions must be outside of the spoke web 3d.

In the example of Fig. 1 and 2, the aforesaid deformed portions are indicated by the numerical reference 10 and extend in a substantially exactly circumferential direction. In the example of Fig. 1 and 2, each of the deformed portions 10 is positioned in a relevant spoke 3b, in a radial position between the relevant spoke web 3d and the peripheral connecting ring 11. Taken all together, the deformed portions 10 cover a total angular span of less than 360°.

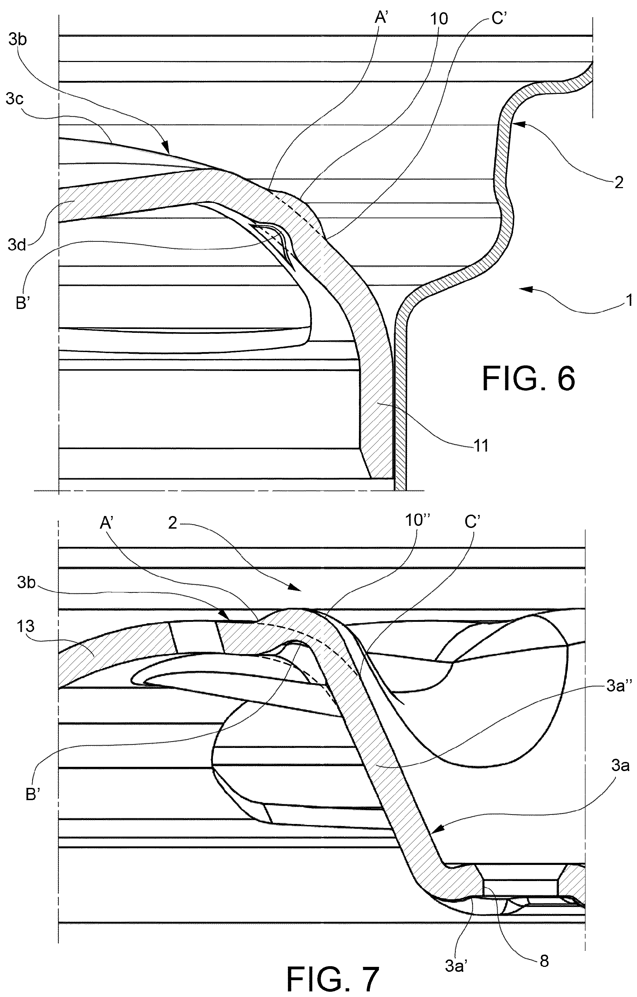

Fig. 2 shows a radial cross-section taken at one of the deformed portions 10. As may be seen, the deformed portion 10 has, in radial cross-section, a contour lowered relative to the surrounding spoke area. Therefore, this contour lowered in radial cross-section defines a pair of concavities A, C facing axially toward the inside of the wheel 1, between which a concavity B facing axially toward the outside of the wheel 1 is interposed. The dotted line in Fig. 2 represents the nominal contour that the spoke 3b would have if there were no deformed portion 10. According to one embodiment illustrated in Fig. 6, the deformed portion 10 could have a contour protruding in radial cross-section with respect to the surrounding spoke area. Therefore, this contour protruding in radial cross-section would define a pair of concavities A, C facing axially toward the outside of the wheel 1, between which a concavity B facing axially toward the inside of the wheel 1 is interposed. In fact, each of the deformed portions 10 introduces a local alteration in the contour of the peripheral area of the relevant spoke 3b; a peripheral area which, as indicated above, consists of a portion of the surface of revolution substantially concentric with the axis z of the wheel.

The connecting ring 11 of the disc 3 is applied against a radially inner surface of the rim 2, which in the illustrated example is placed in the well 24. The connecting ring 11 is fixed to this radially inner surface in a manner known per se, for example by welding. The radially outer edge 13a of the openings 13 is defined by the connecting ring 11.

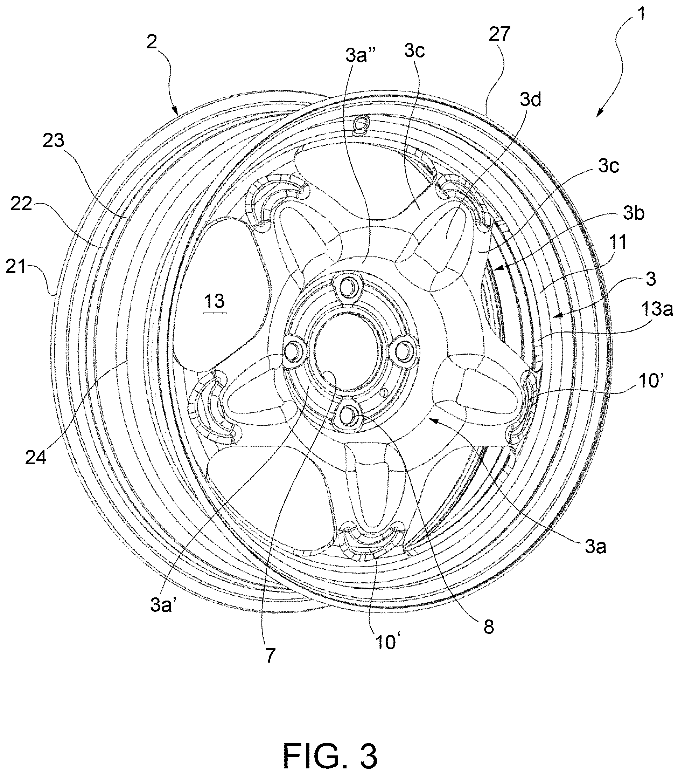

Fig. 3 represents a further embodiment of the invention; elements corresponding to those in the preceding embodiment are assigned the same numerical references. These elements will not be further described. In the embodiment of Fig. 3, the deformed portions indicated by 10' are positioned similarly to the deformed portions in the example in Fig. 1, but have a different shape that may be likened to a crescent. In the embodiment of Fig. 3, the deformed portions 10' have not only a spanning component in the circumferential direction, but also a component in the radial direction. More generally, the shape of the deformed portions placed on the spokes may be different from those depicted in Fig. 1 and 2. Furthermore, there may be two or more deformed portions positioned on each spoke, located, for example, at different radial distances from the center of the wheel. Considering all together the deformed portions placed at a given radial distance from the certain of the wheel, these deformed portions cover a total angular span of less than 360°.

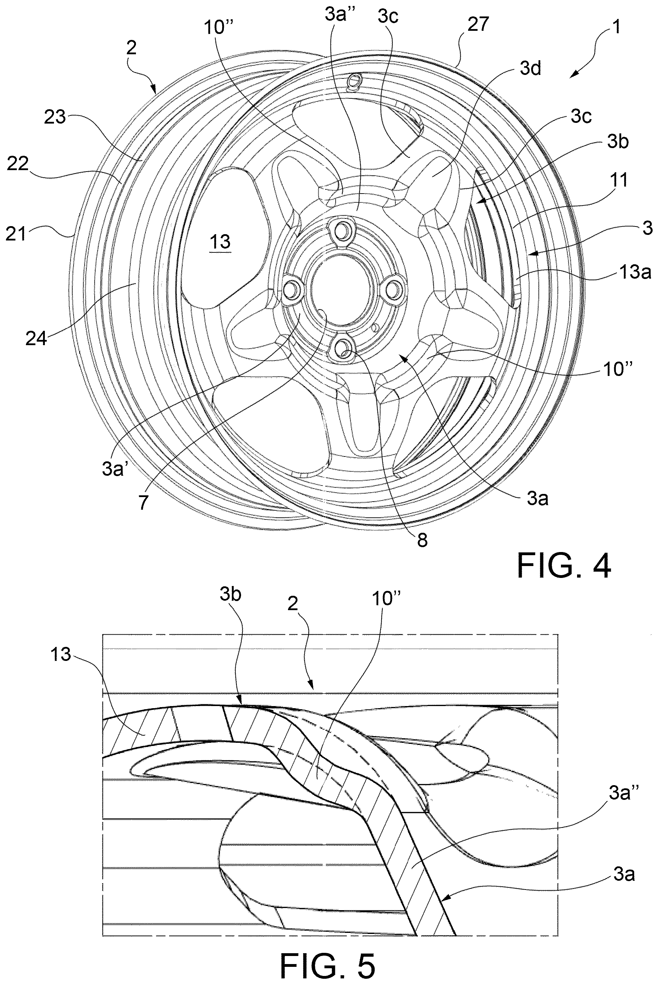

Fig. 4 and 5 represent another embodiment of the invention; elements corresponding to those in the preceding embodiment are assigned the same numerical references. These elements will not be further described. In the embodiment of Fig. 4 and 5, the deformed portions indicated by 10" are radially interposed between the central part 3a of the disc and the plurality of spokes 3b, more precisely at the junction between the connecting portion 3a" and the plurality of spokes 3b.

Each of the deformed portions 10" extends and lies between the spoke webs 3d of each relevant pair of adjacent spokes 3b, in the area commonly known as the "nose" of the disc. In other words, each of the ends of each of the deformed portions 10" reaches at most one side edge of a relevant spoke web 3d. The area affected by the spoke web 3d is not therefore crossed by the deformed portion 10". Therefore, considering all deformed portions 10" together, these deformed portions cover a total angular span of less than 360°.

Fig. 5 shows a radial cross-section taken at one of the deformed portions 10". As may be seen, the deformed portion 10" has, in radial cross-section, a contour lowered relative to the surrounding disc area. Therefore, this contour lowered in radial cross-section defines a pair of concavities A', C' facing axially toward the inside of the wheel 1, between which a concavity B' facing axially toward the outside of the wheel 1 is interposed. The dotted line in Fig. 5 represents the nominal contour that the disc would have if there were no deformed portion 10". According to an embodiment illustrated in Fig. 7, the deformed portion 10" could have a contour protruding in radial cross-section with respect to the surrounding disc area. Therefore, this contour protruding in radial cross-section would define a pair of concavities A', C' facing axially toward the outside of the wheel 1, between which a concavity B' facing axially toward the inside of the wheel 1 is interposed.

## Claims

1. A wheel (1) for vehicles, comprising
a rim (2) of sheet metal, and
a disc (3) of sheet metal, having
- a central part (3a) adapted to be connected to an axle hub, said central part comprising a substantially flat mounting portion (3a') and a connecting portion (3a") surrounding the mounting portion (3a"), wherein the connecting portion (3a") defines a surface of revolution about an axis (z) of the wheel (1) that has, in cross-section, a curvilinear contour that, starting from the mounting portion (3a'), extends axially toward the outside of the wheel (1),
- a plurality of spokes (3b) extending from the connecting portion (3"), each spoke (3b) comprising a pair of spoke ribs (3c) interconnected by a spoke web (3d), and
- a peripheral connecting ring (11) which extends concentrically with the axis (z) of the wheel (1) and interconnects the outer ends of said spokes (3b), said connecting ring (11) being fixed to a radially inner surface (2b) of the rim (2), wherein openings (13) of the disc (3) are defined between the connecting ring (11) and pairs of adjacent spokes (3b), the radially outer edge (13a) of said openings being defined by the connecting ring (11), wherein said spoke ribs (3c) and spoke web (3d) are comprised between said central part (3a) of the disc (3) and said connecting ring (11),
said wheel being **characterized in that** the disc (3) comprises a plurality of separate deformed portions (10; 10'; 10") extending in the circumferential direction with a total angular span of less than 360°, said deformed portions being located on the spokes (3b) outside of the spoke web (3d) and being radially comprised between the connecting portion (3a") and the connecting ring (11), wherein said deformed portions have, in radial cross-section, a contour that is recessed or protruding from a surrounding disc area.

2. The wheel according to claim 1, wherein said contour recessed in radial cross-section defines a pair of concavities (A, C) facing axially toward the inside of the wheel (1), between which a concavity (B) facing axially toward the outside of the wheel (1) is interposed, and wherein said contour protruding in radial cross-section defines a pair of concavities (A', C') facing axially toward the outside of the wheel (1), between which a concavity (B') facing axially toward the inside of the wheel (1) is interposed.

3. The wheel according to claim 1 or 2, wherein each of said deformed portions (10; 10') is positioned in a respective spoke (3b) of said plurality of spokes, between the respective spoke web (3d) and the peripheral connecting ring (11).

4. The wheel according to claim 1 or 2, wherein said deformed portions (10") are radially interposed between the central part (3a) of the disc and the plurality of spokes (3b), each of said deformed portions extending and being comprised between the spoke webs (3d) of each respective pair of adjacent spokes.

## Patentansprüche

1. Rad (1) für Fahrzeuge, umfassend eine Felge (2) aus Blech, und
eine Scheibe (3) aus Blech, aufweisend
- einen Zentralteil (3a), der eingerichtet ist, mit einer Achsnabe verbunden zu werden, wobei der Zentralteil einen im Wesentlichen flachen Montageabschnitt (3a') und einen Verbindungsabschnitt (3a") umfasst, der den Montagesabschnitt (3a') umgibt, wobei der Verbindungsabschnitt (3a") eine Rotationsfläche um eine Achse (z) des Rades (1) definiert, die in dem Querschnitt ein krummliniges Profil aufweist, das sich, ausgehend von dem Montageabschnitt (3a'), axial nach außen des Rades (1) erstreckt,
- eine Mehrzahl von Speichen (3b), die sich von dem Verbindungsabschnitt (3") erstrecken, wobei jede Speiche (3b) ein Paar von Speichenrippen (3c) umfasst, die durch einen Speichensteg (3d) miteinander verbunden sind, und
- einen Umfangsverbindungsring (11), der sich konzentrisch mit der Achse (z) des Rades (1) erstreckt und die äußeren Enden der Speichen (3b) miteinander verbindet, wobei der Verbindungsring (11) an einer radial inneren Oberfläche (2b) der Felge (2) befestigt wird, wobei Öffnungen (13) der Scheibe (3) zwischen dem Verbindungsring (11) und Paaren angrenzender Speichen (3b) definiert werden, wobei der radial äußere Rand (13a) der Öffnungen durch den Verbindungsring (11) definiert wird, wobei die Speichenrippen (3c) und der Speichensteg (3d) zwischen dem Zentralteil (3a) der Scheibe (3) und dem Verbindungsring (11) angeordnet sind,
wobei das Rad **dadurch gekennzeichnet ist, dass** die Scheibe (3) eine Mehrzahl von getrennten verformten Bereiche (10; 10'; 10") umfasst, die sich in Umfangsrichtung mit einem gesamten Winkelabstand von weniger als 360° erstrecken, wobei die verformten Bereiche an den Speichen (3b) außerhalb des Speichensteges (3d) angeordnet sind und radial zwischen dem Verbindungsabschnitt (3a") und dem Verbindungsring (11) angeordnet sind, wobei die verformten Bereiche in dem radialen Querschnitt ein Profil aufweisen, das vertieft ist oder aus einem umgebenden Scheibenbereich vorsteht.

2. Rad nach Anspruch 1, wobei das Profil, das in dem radialen Querschnitt vertieft ist, ein Paar von Konkavitäten (A, C) definiert, die axial nach innen des Rades (1) gerichtet sind, zwischen denen eine Konkavität (B), die axial nach außen des Rades (1) gerichtet ist, angeordnet ist, und wobei das Profil, das in dem radialen Querschnitt vorsteht, ein Paar von Konkavitäten (A', C') definiert, die axial nach außen des Rades (1) gerichtet sind, zwischen denen eine Konkavität (B'), die axial nach innen des Rades (1) gerichtet ist, angeordnet ist.

3. Rad nach Anspruch 1 oder 2, wobei jeder der verformten Bereiche (10; 10') in einer jeweiligen Speiche (3b) der Mehrzahl von Speichen zwischen dem jeweiligen Speichensteg (3d) und dem Umfangsverbindungsring (11) angeordnet ist.

4. Rad nach Anspruch 1 oder 2, wobei die verformten Bereiche (10") radial zwischen dem Zentralteil (3a) der Scheibe und der Mehrzahl von Speichen (3b) angeordnet sind, wobei sich jeder der verformten Bereiche zwischen den Speichenstegen (3d) jedes jeweiligen Paares angrenzender Speichen erstreckt und angeordnet ist.

## Revendications

1. Roue (1) pour véhicules, comprenant
une jante (2) en tôle, et
un disque (3) en tôle, ayant
- une partie centrale (3a) adaptée à être reliée à un moyeu d'essieu, ladite partie centrale comprenant une portion de montage (3a') sensiblement plate et une portion de connexion (3a") entourant la portion de montage (3a"), dans laquelle la portion de connexion (3a") définit une surface de révolution autour d'un axe (z) de la roue (1) qui a, en section transversale, un contour curviligne qui, à partir de la portion de montage (3a'), s'étend axialement vers l'extérieur de la roue (1),
- une pluralité de rayons (3b) s'étendant à partir de la portion de connexion (3"), chaque rayon (3b) comprenant une paire de nervures de rayon (3c) interconnectées par une âme de rayon (3d), et
- un anneau de connexion périphérique (11) qui s'étend concentriquement avec l'axe (z) de la roue (1) et interconnecte les extrémités extérieures desdits rayons (3b), ledit anneau de connexion (11) étant fixé à une surface radialement interne (2b) de la jante (2), dans laquelle des ouvertures (13) du disque (3) sont définies entre l'anneau de connexion (11) et des paires de rayons adjacents (3b), le bord radialement externe (13a) desdites ouvertures étant défini par l'anneau de connexion (11), dans laquelle lesdites nervures de rayon (3c) et l'âme de rayon (3d) sont comprises entre ladite partie centrale (3a) du disque (3) et ledit anneau de connexion (11),
ladite roue étant **caractérisée en ce que** le disque (3) comprend une pluralité de portions déformées séparées (10; 10'; 10") s'étendant dans la direction circonférentielle avec une étendue angulaire totale inférieure à 360°, lesdites portions déformées étant situées sur les rayons (3b) à l'extérieur de l'âme de rayon (3d) et étant radialement comprises entre la portion de connexion (3a") et l'anneau de connexion (11), dans laquelle lesdites portions déformées ont, en section transversale radiale, un contour qui est en retrait ou en saillie par rapport à une zone de disque environnante.

2. Roue selon la revendication 1, dans laquelle ledit contour en retrait en section transversale radiale définit une paire de concavités (A, C) orientées axialement vers l'intérieur de la roue (1), entre lesquelles une concavité (B) orientée axialement vers l'extérieur de la roue (1) est interposée, et dans laquelle ledit contour en saillie en section transversale radiale définit une paire de concavités (A', C') orientées axialement vers l'extérieur de la roue (1), entre lesquelles une concavité (B ') orientée axialement vers l'intérieur de la roue (1) est interposée.

3. Roue selon la revendication 1 ou 2, dans laquelle chacune desdites portions déformées (10; 10') est positionnée dans un rayon respectif (3b) de ladite pluralité de rayons, entre l'âme de rayon respective (3d) et l'anneau de connexion périphérique (11).

4. Roue selon la revendication 1 ou 2, dans laquelle lesdites portions déformées (10") sont radialement interposées entre la partie centrale (3a) du disque et la pluralité de rayons (3b), chacune desdites portions déformées s'étendant et étant comprise entre les âmes de rayon (3d) de chaque paire respective de rayons adjacents.
